# EUROPÄISCHE PATENTANMELDUNG

(11) **EP 2 428 816 A1**
(43) Veröffentlichungstag der Anmeldung: **14.03.2012**
(21) Anmeldenummer: 11176752.1
(22) Anmeldetag: 05.08.2011
(51) Int. Cl.: G01S 7/527, G01S 15/58

(54) **Verfahren und Vorrichtung zur Bestimmung einer aus dem Doppler-Effekt resultierenden Doppler-Frequenzverschiebung**

(30) Priorität: 08.09.2010 DE 102010044742
(71) Anmelder: ATLAS Elektronik GmbH, 28309 Bremen (DE)
(72) Erfinder: Freking, Benno, 28844 Weyhe-Leeste (DE)
(74) Vertreter: Wasiljeff, Johannes M.B.

(57) **Zusammenfassung**

Die Erfindung betrifft ein Verfahren zum Bestimmen einer aus dem Doppler-Effekt resultierenden Doppler-Frequenzverschiebung 30 zwischen einem Sendesignal 4 und einem aus diesem Sendesignal 4 resultierenden Empfangssignal 20. Dazu wird eine Mehrzahl von relativen Frequenzverschiebungen um jeweils einen reellen Frequenzverschiebungswert durchgeführt, indem entweder wenigstens ein verschobenes diskretes Amplitudenspektrum 8 des Sendesignals 4 und wenigstens ein verschobenes diskretes Amplitudenspektrum 22 des Empfangssignals 20 oder jeweils eine Mehrzahl von verschobenen Amplitudenspektren des Sendesignals 4 oder des Empfangssignals 20 erzeugt werden. Zu diesen Frequenzverschiebungen werden Qualitätsmaße ermittelt, welche die Qualität der Übereinstimmung der verschobenen Signale angeben. Dasjenige Qualitätsmaß, welches der höchsten Qualität der Übereinstimmung entspricht, wird ermittelt und der zu diesem Qualitätsmaß zugehörige Frequenzverschiebungswert wird der zu bestimmenden Doppler-Frequenzverschiebung 30 gleichgesetzt.

Ferner betrifft die Erfindung eine Vorrichtung zum Ausführen des erfindungsgemäßen Verfahrens.

## Beschreibung

Die Erfindung betrifft ein Verfahren zum Bestimmen einer aus dem Doppler-Effekt resultierenden Doppler-Frequenzverschiebung zwischen einem Sendesignal und einem aus diesem Sendesignal resultierenden Empfangssignal, eine Vorrichtung gemäß dem Oberbegriff des Anspruchs 12 sowie ein Computerprogramm, welches zum Ausführen des Verfahrens über geeignete Programmcodemittel verfügt.

Herkömmlicherweise wird mittels bekannter Verfahren, wie bspw. Sonarverfahren und Radarverfahren, welche den Doppler-Effekt ausnutzen eine Doppler-Frequenzverschiebung aus einer Differenz einer Frequenz des Sendesignals und einer zu bestimmenden Frequenz des Empfangssignals ermittelt. Die Ermittlung erfolgt dabei vorwiegend mittels Korrelation von Spektren aus dem Sendesignal und dem Empfangssignal, wie bspw. in TW 241788B gezeigt, oder direktem Mustervergleich, wie bspw. in DE 10 2008 029 352 A1 gezeigt. Diese Doppler-Frequenzverschiebung wird üblicherweise zur Ermittlung der Geschwindigkeit zwischen einem das Sendesignal aussendenden und das Empfangssignal empfangenden Objekt und einem weiteren hierzu beabstandeten Objekt, welches das Sendesignal reflektiert, genutzt. Um ein Messergebnis der Geschwindigkeit mit ausreichender Genauigkeit zu erzielen, werden sehr lange Signale benötigt. Um Überlappungen von Sende- und Empfangssignalen zu vermeiden, können aber die Sendesignale nicht beliebig lang gemacht werden. Dies erschwert vor allem die Bestimmung der Doppler-Frequenzverschiebung in Flachwassergebieten und bei einer derartigen Verwendung des Doppler-Sonars an Bord von U-Booten oder AUVs, deren Distanz zum Meeresboden oftmals sehr gering ist.

US 4 176 351 zeigt ein Verfahren zum Bestimmen einer Doppler-Frequenzverschiebung, bei dem für eine Geschwindigkeitsermittlung ein "Continuous Wave" (CW)-Radar verwendet wird. Dazu wird das Radar-Empfangssignal einer Mehrzahl von Bandpassfiltern zugeführt und nach einer Filterung dasjenige Empfangssignal aus der Mehrzahl der gefilterten Empfangssignale ausgewählt, welches nach der Filterung die meiste Energie aufweist. Zu jedem Bandpassfilter wird somit eine mögliche Doppler-Frequenzverschiebung aus einer Differenz der bekannten Frequenz des Sendesignals und einer dem Bandpassfilter zugehörige Mittenfrequenz ermittelt.

Dieses bekannte Verfahren hat jedoch den Nachteil, dass eine Genauigkeit bei der Ermittlung der Doppler-Frequenzverschiebung durch die Mittenfrequenzen der Bandpassfilter beschränkt ist. Ferner ist ein derartiges Verfahren nachteilig, da ein Wertebereich einer zu erwartenden Doppler-Frequenzverschiebung abhängig ist von der Anzahl der zum Filtern des Empfangssignals verwendeten Bandpassfilter.

WO2004/005945 A1 zeigt ein Verfahren zum Schätzen einer Frequenz eines Signals, bspw. eines "Continuous Wave" (CW)-Signals. Bei diesem bekannten Verfahren wird zunächst das Signal mittels der schnellen Fourier-Transformation, nachfolgend als FFT bezeichnet, transformiert. Anschließend wird ein Koeffizient der FFT ermittelt, nämlich derjenige Koeffizient, dessen Betrag maximal ist. Auf diese Weise entspricht die zu ermittelnde Frequenz des Signals der diesem Koeffizienten zugehörigen Frequenz. Alternativ wird die Genauigkeit der zu ermittelnden Frequenz mit einer modifizierten diskreten Fourier-Transformation, nachfolgend als DFT bezeichnet, erhöht, indem die Koeffizienten der DFT verändert werden.

Dieses bekannte Verfahren hat den Nachteil, das die FFT und die anschließende DFT den maximalen Koeffizienten zu nur einer Frequenz des Signals ermittelt. Diese Frequenz könnte jedoch aufgrund eines verrauschten Signals zu einer fehlerhaft ermittelten Frequenz führen, wenn der maximale Koeffizient nicht der exakten Frequenz des Signals zugehörig ist, sondern einer angrenzenden Frequenz. Die Ermittlung der Doppler-Frequenzverschiebung mit diesem Verfahren wäre aufgrund einer falsch ermittelten Frequenz des Empfangssignals ebenfalls fehlerbehaftet.

DE 196 08 331 C2 beschreibt eine Vorrichtung zur Messung einer Frequenz eines diskreten Empfangssignals sowie eine Verwendung dieser Vorrichtung zur Messung einer Geschwindigkeit von Wasserfahrzeugen. Diese bekannte Vorrichtung weist ein Schieberegister auf, das derart ausgebildet ist, um aus dem Empfangssignal ein geklipptes Signal zu erzeugen und als Einheitsimpulse einzulesen. Ferner weist es Mittel auf, die derart ausgebildet sind, um eine Häufigkeit einer Belegung der eingelesenen Einheitsimpulse an jeder Bitstelle im Schieberegister zu ermitteln und um aus dieser Häufigkeit die Frequenz des diskreten Empfangssignals zu ermitteln. Aus der ermittelten Frequenz des Empfangssignals wird dann eine Doppler-Frequenzverschiebung ermittelt, mittels derer eine Geschwindigkeit bestimmt werden kann.

Dieses bekannte Verfahren hat den Nachteil, dass eine Genauigkeit der ermittelten Frequenz durch die Anzahl der aus den Signal verstärkten und dadurch geklippten Einheitsimpulsen und ihrer Häufigkeit an einer der vorbestimmten Frequenz entsprechenden Bitstelle abhängt.

GB 2437619A zeigt eine Messeinrichtung zur Messung einer Doppler-Frequenzverschiebung, bei der die Genauigkeit der ermittelten Frequenz erhöht wird, indem baryzentrische Frequenzbereiche sowohl in dem Leistungsspektrum des Sendesignals als auch in dem Leistungsspektrum des Empfangssignals ermittelt werden. Dabei werden die baryzentrischen Bereiche des Leistungsspektrums des Empfangssignals ausgehend von einer vorläufigen Doppler-Frequenzverschiebung solange angepasst, bis die ermittelte Doppler-Frequenzverschiebung konvergiert. Die Doppler-Frequenzverschiebung wird auf der Basis einer Vielzahl von Frequenzlinien und einer Vielzahl zugehöriger baryzentrischer Frequenzbereiche ermittelt, so dass durch eine geeignete Gewichtung und Mittelung genauere Werte als bei der Korrelation der beiden Leistungsspektren erzielt werden können.

Der Erfindung liegt nach alledem das Problem zugrunde, die Messgenauigkeit bei der Bestimmung der Doppler-Frequenzverschiebung zu erhöhen, insbesondere für Empfangssignale und/oder Sendesignale mit sehr kurzer Signaldauer.

Die Erfindung löst dieses Problem zum Bestimmen einer aus dem Doppler-Effekt resultierenden Doppler-Frequenzverschiebung gemäß Anspruch 1 sowie mit einer Vorrichtung gemäß Anspruch 12 und einem Computerprogramm gemäß Anspruch 15. Dazu führt das erfindungsgemäße Verfahren eine Mehrzahl, vorbestimmter, relativer Frequenzverschiebungen um jeweils einen reellen Frequenzverschiebungswert zwischen dem Sendesignal und dem Empfangssignal durch.

Es werden entweder wenigstens ein verschobenes diskretes Amplitudenspektrum des Sendesignals und wenigstens ein verschobenes diskretes Amplitudenspektrum des Empfangssignals erzeugt oder es wird eine Mehrzahl von verschobenen diskreten Amplitudenspektren des Sendesignals allein oder eine Mehrzahl von verschobenen diskreten Amplitudenspektren des Empfangssignals allein erzeugt. Die für die Verschiebung theoretisch möglichen, reellen Frequenzverschiebungswerte sind dabei nicht auf das Einfache oder Vielfache der Frequenzauflösung des diskreten Amplitudenspektrums des Sendesignals oder des Empfangssignals beschränkt. Die für die Verschiebung theoretisch möglichen, reellen Frequenzverschiebungswerte können vielmehr sowohl Bruchteile als auch reelle Mehrfache der Frequenzauflösung entsprechen.

Es wird ferner jeweils eine Qualität einer Übereinstimmung zwischen dem Sendesignal und dem Empfangssignal, die relativ um den jeweiligen reellen Frequenzverschiebungswert zueinander verschoben sind, ermittelt. Die Qualität dieser Übereinstimmung wird als Qualitätsmaß dem jeweiligen reellen Frequenzverschiebungswert zugeordnet, um den das Sendesignal und das Empfangssignal relativ zueinander verschoben sind. Ferner wird dasjenige Qualitätsmaß aus der Mehrzahl von Qualitätsmaßen ermittelt, welches der höchsten Qualität der Übereinstimmung entspricht. Der zu diesem ermittelten Qualitätsmaß zugeordnete Frequenzverschiebungswert wird dann der zu bestimmenden, aus dem Doppler-Effekt resultierenden Doppler-Frequenzverschiebung gleichgesetzt.

Da eine derartige Ermittlung der Übereinstimmung nicht nur auf einer Frequenz, sondern auf dem gesamten Amplitudenspektrum des Empfangssignals basiert, wird, insbesondere bei einem verrauschten Empfangssignal, eine genauere Frequenzverschiebung ermittelt als mit herkömmlichen Verfahren.

Ferner löst die Erfindung das o.g. Problem mittels einer Vorrichtung, die ein Spektrumgeneratormodul, ein Qualitätsermittlungsmodul und ein Auswahlmodul aufweist.

Das Spektrumgeneratormodul ist derart ausgebildet, um eine Mehrzahl von relativen Frequenzverschiebungen vorzunehmen. Bei diesen relativen Frequenzverschiebungen handelt es sich jeweils um Frequenzverschiebungen zwischen dem Sendesignal und dem Empfangssignal und zwar um jeweils einen reellen Frequenzverschiebungswert. Hierfür ist das Spektrumgeneratormodul ferner derart ausgebildet, um wenigstens ein verschobenes diskretes Amplitudenspektrum des Sendesignals und wenigstens ein verschobenes diskretes Amplitudenspektrum des Empfangssignals zu erzeugen. Des Weiteren ist das Spektrumgeneratormodul derart ausgebildet, um eine Mehrzahl von verschobenen diskreten Amplitudenspektren des Sendesignals oder eine Mehrzahl von verschobenen diskreten Amplitudenspektren des Empfangssignals zu erzeugen.

Das Qualitätsermittlungsmodul ist derart ausgebildet, um jeweils eine Qualität einer Übereinstimmung zwischen dem Sendesignal und dem Empfangssignal zu ermitteln, wobei die Signale relativ um den jeweiligen reellen Frequenzverschiebungswert zueinander verschobenen sind. Die Qualität dieser Übereinstimmung wird als Qualitätsmaß dem jeweiligen, der relativen Verschiebung zwischen dem Sendesignal und dem Empfangssignal zugehörigen Frequenzverschiebungswert zugeordnet.

Ferner beinhaltet das Qualitätsermittlungsmodul das Auswahlmodul, welches derart ausgebildet ist, um dasjenige Qualitätsmaß aus der Mehrzahl von Qualitätsmaßen zu ermitteln, welches der höchsten Qualität der Übereinstimmung entspricht, wobei der diesem ermittelten Qualitätsmaß zugeordnete Frequenzverschiebungswert der zu bestimmenden, aus dem Doppler-Effekt resultierenden Doppler-Frequenzverschiebung gleichgesetzt wird.

In einer bevorzugten Ausführungsform der Erfindung werden das diskrete Amplitudenspektrum des Sendesignals und/oder das diskrete Amplitudenspektrum des Empfangssignals mittels einer Frequenztransformation aus den entsprechenden Signalen im Zeitbereich erzeugt. Dies erfolgt insbesondere mittels einer diskreten Fourier-Transformation (DFT) oder mittels einer schneller Fourier-Transformation (FFT), wobei die jeweiligen Frequenztransformationen die gleichen Frequenzauflösungen aufweisen, welche vorteilhafterweise zuvor festlegbar sind.

Bei der Fourier-Transformation werden Zeitfenster endlicher Länge verwendet, die - wenn die Fensterlänge nicht exakt der Periodendauer der im Signal enthaltenen Frequenz entspricht - zu dem sog. Leck-Effekt führen. Dieser Leck-Effekt wird vorteilhaft ausgenutzt, um einen Mustervergleich zwischen den Amplitudenspektren des Sendesignals und des Empfangssignals durchzuführen. Durch die Verwendung von sehr vielen Frequenzlinien, die aufgrund des Leck-Effekts im Amplitudenspektrum vorhanden sind, ist ein derartiges Verfahren zum Bestimmen der Doppler-Frequenzverschiebung weniger rauschanfällig.

In einer weiteren bevorzugten Ausführungsform der Erfindung wird die Qualität der Übereinstimmung zwischen dem Sendesignal und dem Empfangssignal mittels eines Mustervergleichs ermittelt, wobei das Sendesignal und das Empfangssignal relativ um den jeweiligen Frequenzverschiebungswert zueinander verschoben sind. Für den Mustervergleich werden das Amplitudenspektrum des Sendesignals und das Amplitudenspektrum des Empfangssignals im Frequenzbereich herangezogen. Dadurch entsteht der Vorteil, dass der Mustervergleich ein zugehöriges Qualitätsmaß liefert, wodurch sich der Vergleich qualitativ bewerten lässt.

Gemäß einer weiteren Ausführungsform der Erfindung wird der Mustervergleich mittels eines statistischen Analyseverfahrens, insbesondere einer linearen Regression, durchgeführt. Vorteilhafterweise liefert die lineare Regression jeweils einen Wert für die Steigung der Regressionsgeraden, den Y-Offset und die Standardabweichung, um ein Qualitätsmaß des Vergleichs zu ermitteln.

In einer weiteren Ausführungsform der Erfindung wird die Qualität der Übereinstimmung zwischen dem Sendesignal und dem Empfangssignal, die relativ um den jeweiligen Frequenzverschiebungswert zueinander verschoben sind, mittels einer Faltung im Zeitbereich ermittelt. Dazu wird jeweils ein gefaltetes Signal aus dem relativ zueinander verschobenen Sende- und Empfangssignal erzeugt. Dieses erzeugte, gefaltete Signal wird in den Frequenzbereich transformiert. Der Betrag des transformierten Signals auf Höhe der maximalen Amplitude wird dem Qualitätsmaß zugeordnet.

In einer weiteren bevorzugten Ausführungsform der Erfindung wird der mögliche reelle Frequenzverschiebungswert in zwei nacheinander zu bestimmende Frequenzverschiebungswerte aufgeteilt. Ein erster Frequenzverschiebungswert, nachfolgend als Grobwert bezeichnet, entspricht dem Einfachen oder einem ganzzahligen Mehrfachen der Frequenzauflösung. Ein zweiter Frequenzverschiebungswert, nachfolgend als Feinwert bezeichnet, entspricht einem Bruchteil des Grobwertes zwischen -1 und 1. Durch eine Unterteilung des reellen Frequenzverschiebungswerts in einen ganzzahligen Grobwert und einen nichtganzzahligen Feinwert lässt sich eine Suche nach dem "optimalen" Frequenzverschiebungswert beschleunigen und vorteilhafterweise Rechenleistung einsparen.

In einer weiteren Ausführungsform der Erfindung wird ein dem Grobwert oder dem Feinwert zuordbares Qualitätsmaß mittels der Qualität der Übereinstimmung zwischen dem relativ um den jeweiligen Frequenzverschiebungswert zueinander verschobenen Sendesignal und Empfangssignal durch eine Faltung dieser verschobenen Signale oder durch den Mustervergleich zwischen diesen verschobenen Signalen ermittelt. Da die Bestimmung der Qualitätsmaße sowohl im Zeitbereich als auch im Frequenzbereich möglich ist, entstehen die Vorteile einer schnellen Verarbeitung im Zeitbereich und die Verwendung vorhandener Strukturen im Frequenzbereich.

Gemäß einer weiteren Ausführungsform der Erfindung wird ein dem Feinwert zugeordnetes Qualitätsmaß mittels der Qualität der Übereinstimmung zwischen einem um den Grobwert verschobenen Amplitudenspektrum des Empfangssignals und einem um diesen Feinwert verschobenen Amplitudenspektrum des Sendesignals im Frequenzbereich ermittelt. Vorzugsweise wird das Empfangssignal um den Grobwert verschoben und das dem Feinwert zugeordnete Qualitätsmaß durch Mustervergleich zwischen den um den Feinwert veränderten Sendesignal und den um den Grobwert verschobenen Empfangssignal ermittelt. Da das Empfangssignal nur einmal um den Grobwert verschoben wird, werden vorteilhaft Rechenoperationen minimiert.

In einer weiteren Ausführungsform der Erfindung wird das um einen Frequenzverschiebungswert verschobene diskrete Amplitudenspektrum des Sendesignals oder des Empfangssignals auf der Grundlage seines diskreten Amplitudenspektrums erzeugt. Dazu werden mehrere jeweils um die Frequenzauflösung zueinander beabstandete Interpolanten erzeugt, insbesondere mittels linearer, polynomialer oder trigonometrischer Interpolation. Die Interpolanten sind dabei als (neue) Amplitudenwerte im Amplitudenspektrum an bisher diskret undefinierten (neuen) Frequenzwerten ausgebildet und werden aus zwei oder mehreren dem bisher diskret undefinierten (neuen) Frequenzwert benachbarten Frequenzwerten zugeordneten Amplituden ermittelt. Eine derartige Frequenzerhöhung durch Interpolation von bestehenden diskreten Werten lässt sich für das Sendesignal und/oder das Empfangssignal durchführen und benötigt vorteilhafterweise keinerlei Informationen über den theoretischen Amplitudengang des Signals.

In einer weiteren bevorzugten Ausführungsform der Erfindung wird das um einen Frequenzverschiebungswert verschobene diskrete Amplitudenspektrum des Sendesignals auf der Grundlage seines Amplitudenfrequenzgangs erzeugt. Dazu wird aus diesem Amplitudenfrequenzgang des Sendesignals das diskrete, um den Frequenzverschiebungswert verschobene Amplitudenspektrum des Sendesignals numerisch, analytisch und/oder graphisch ermittelt. Die Amplituden dieses ermittelten Amplitudenspektrums sind jeweils um die Frequenzauflösung beabstandet. Eine derartige Frequenzerhöhung durch Interpolation des theoretischen Amplitudengangs des Sendesignals ist nur für das Sendesignal durchführbar und abhängig von dessen theoretischen Amplitudengang. Vorteilhafterweise ist somit eine exakte und theoretisch unbegrenzte Erhöhung der Frequenzauflösung möglich.

Gemäß einer weiteren Ausführungsform der Erfindung wird eine Geschwindigkeit in Abhängigkeit von Wellenübertragungseigenschaften in einem Medium, insbesondere Wasser, aus der Doppler-Frequenzverschiebung ermittelt. Darüber hinaus wird diese ermittelte Geschwindigkeit mittels des Qualitätsmaßes, das dieser Doppler-Frequenzverschiebung zugeordnet ist, qualitativ bewertet. Somit lässt sich vorteilhaft aus einer Mehrzahl durchgeführter Verfahren mit einer Mehrzahl an qualitätsbewertenden Geschwindigkeiten eine gewichtete und qualitätsbewertete Geschwindigkeit ermitteln, welche die Messgenauigkeit des Verfahrens angibt.

In einer weiteren bevorzugten Ausführungsform der Erfindung umfasst die vorstehend genannte Vorrichtung zur Bestimmung einer aus dem Doppler-Effekt resultierenden Doppler-Frequenzverschiebung die Sendeanordnung und die Empfangsanordnung, welche an einem Wasserfahrzeug unter Wasser anbaubar sind und derart ausgebildet sind, um hydroakustische Wellen zu senden bzw. zu empfangen. Eine derartige Vorrichtung entspricht vorteilhafterweise einem Sonar-System, mit dem sich Geschwindigkeiten unter Wasser ermitteln lassen.

Alternativ dazu weist eine weitere Ausführungsform der Erfindung die Sendeund Empfangsanordnung auf, welche derart ausgebildet sind, um elektromagnetische Wellen zu senden bzw. zu empfangen. Eine so ausgebildete Vorrichtung entspricht einem Radar-System und besitzt den Vorteil, Geschwindigkeiten von Objekten, wie bspw. Flugzeuge, Autos, usw., über Wasser zu ermitteln.

Eine alternative Ausführungsform der Erfindung betrifft ein Computerprogramm, insbesondere ein Computerprogrammprodukt, welches Programmcodemittel aufweist zum Ausführen des erfindungsgemäßen Verfahrens, wenn das Programm auf einem Computer oder einer entsprechenden Recheneinheit ausgeführt wird. Die Programmcodemittel sind auf Computer lesbare Datenträger speicherbar, wobei geeignete Datenträger bspw. Disketten, Festplatten, Flash-Speicher, E-Proms, CDs, DVDs und anderes mehr sein können. Auch ein Download eines Programms über Computernetze, insbesondere Internet, Intranet, usw., ist möglich.

Weitere vorteilhafte Ausführungsformen der Erfindung ergeben sich aus den Unteransprüchen sowie aus den anhand der anliegenden Zeichnung näher erläuterten Ausführungsbeispielen. In der Zeichnung zeigen:
- Fig. 1: eine schematische Darstellung des Verfahrenablaufs entsprechend dem erfindungsgemäßen Verfahren,
- Fig. 2A-B: eine vereinfachte Darstellung des Sendesignals im Zeit- und im Frequenzbereich,
- Fig. 3: eine schematische Darstellung des Funktionsablaufs des Qualitätsermittlungsmoduls,
- Fig. 4: eine vereinfachte Darstellung des Amplitudenspektrums des Sendesignals sowie das verschobene Amplitudenspektrum des Empfangssignals,
- Fig. 5: eine vereinfachte Darstellung der Ergebnisse der linearen Regression,
- Fig. 6: eine vereinfachte Darstellung der Zwischenwerte des Amplitudenspektrums des Sendesignals und
- Fig. 7: eine vereinfachte Darstellung des um den Feinwert verschobenen Amplitudenspektrums des Sendesignals.

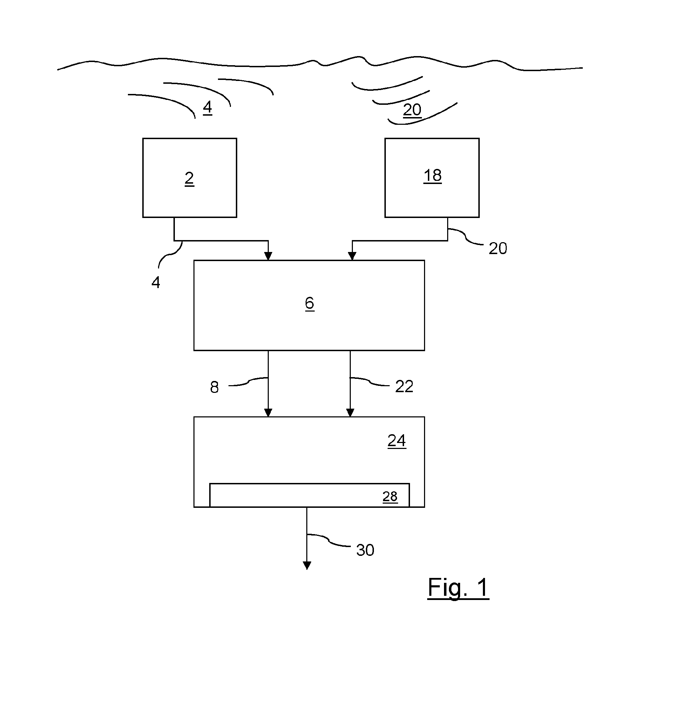

Fig. 1 zeigt eine schematische Darstellung des Verfahrensablaufs eines Ausführungsbeispiels des erfindungsgemäßen Verfahrens. Hierbei wird zunächst mittels einer Sendeanordnung 2 ein Sendesignal 4 mit einer bestimmten, konstanten Frequenz und einer geringen Pulsdauer ausgesendet.

Im Folgenden handelt es sich bei der Sendeanordnung 2 um eine Anordnung, welche an einem Wasserfahrzeug unter Wasser angeordnet ist und derart ausgebildet ist, um hydroakustische Wellen zu senden. Bevorzugt werden Continous-Wave Signale als hydroakustische Wellen verwendet, welche als Sendesignal 4 ausgesandt werden. Es sind jedoch auch andere Sendesignale 4 verwendbar, die über eine konstante, bekannte Frequenz verfügen. Beinhaltet das Sendesignal 4 mehr als eine konstante Frequenz, so müssen allerdings diese Frequenzen weiter voneinander beabstandet sein als die maximal zu bestimmende Doppler-Frequenzverschiebung.

In einer alternativen Ausgestaltung der Erfindung ist die Sendeanordnung 2 derart ausgebildet, um elektroakustische Wellen zu senden und bildet somit ein Radar-System.

Innerhalb eines Spektrumgeneratormoduls 6 wird mittels einer Frequenztransformation aus dem bekannten Sendesignal 4 ein zugehöriges diskretes Amplitudenspektrum 8 ermittelt.

**Die nachfolgenden Erläuterungen beziehen sich auf die Fast-**Fourier-Transformation (FFT) als angewendete Frequenztransformation. Weitere diskrete Transformationen sind ebenso möglich, sofern sie bei der Signalanalyse den sog. Leck-Effekt erzeugen.

Aufgrund des kurzen Pulses des Sendesignals 4 besteht das Amplitudenspektrum 8 nicht aus einer Linie, sondern besitzt eine substanzielle Breite.

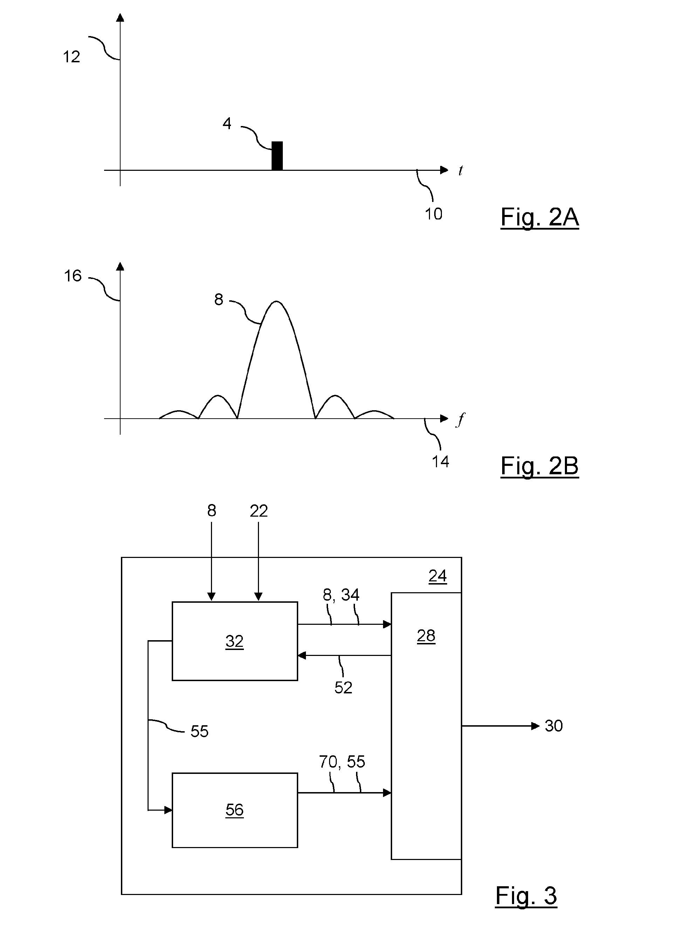

Fig. 2A-B zeigen eine vereinfachte Darstellung des Amplitudenspektrums 8 des Sendesignals 4.

In Fig. 2A ist eine Darstellung des Sendesignals 4 im Zeitbereich gezeigt. In dieser Darstellung ist auf einer horizontalen Achse 10 die Zeit t aufgetragen und auf einer vertikalen Achse 12 die Amplitude des Sendesignals 4. Es handelt sich hierbei um ein pulsförmiges Signal von kurzer Dauer.

Fig. 2B ist eine Darstellung des Amplitudenspektrums 8 des Sendesignals 4 im Frequenzbereich. Dazu ist auf einer horizontalen Achse 14 die Frequenz f aufgetragen und auf einer vertikalen Achse 16 die Amplituden des Amplitudenspektrums 8.

Fig. 2A-B verdeutlichen den sog. Leck-Effekt, wie er bei der Frequenztransformation auftreten kann. Das Amplitudenspektrum 8 besteht nicht aus einer Frequenz-Linie, sondern besitzt eine substanzielle Breite. Dies resultiert aus der zeitlichen Begrenzung des Sendesignals 4 durch eine Rechteckfunktion. Es führt dazu, dass das Signal 4 abgeschnitten wird und nur dann korrekt mit der Fourier-Transformation transformiert werden kann, wenn es periodisch fortsetzbar ist. Falls die Fensterlänge nicht gerade ein ganzzahliges Vielfaches der Periode des Signals 4 ist, kommt es zum Leck-Effekt und das errechnete Amplitudenspektrum 8 "verschmiert". Da das Spektrum der Fensterfunktion ausschlaggebend für das Leck ist, entsteht ein derartiger sin x / x - Verlauf gemäß Fig. 2B.

Die Erfindung hat erkennt, den Leck-Effekt vorteilhaft auszunutzen. Statt einer einzelnen Spektrallinie existieren neben der Hauptfrequenz auch andere Frequenzen im Amplitudenspektrum 8. Dadurch kann im weiteren Verfahrensablauf ein Mustervergleich auf mehr als nur eine Spektrallinie gestützt werden.

Entsprechend des Verfahrensablaufs gemäß Fig. 1 wird ein von einer Empfangsanordnung 18 empfangenes Empfangssignal 20 dem Spektrumgeneratormodul 6 übergeben. Bei der Empfangsanordnung 18 handelt es sich im Folgenden um eine Anordnung, welche an einem Wasserfahrzeug unter Wasser angeordnet ist und derart ausgebildet ist, um hydroakustische Wellen zu empfangen. Die Erfindung ist jedoch nicht auf eine Empfangsanordnung 18 unter Wasser beschränkt. In einer alternativen Ausgestaltung der Erfindung ist die Empfangsanordnung 18 derart ausgebildet, um elektroakustische Wellen zu empfangen und bildet somit ein Radar-System.

Innerhalb des Spektrumgeneratormoduls 6 wird mittels der Frequenztransformation aus dem Empfangssignal 20 ein zugehöriges Amplitudenspektrum 22 ermittelt, wobei die Abtastfrequenz und die FFT-Länge der des Amplitudenspektrums 8 des Sendesignals 4 entspricht. Dieses Amplitudenspektrum 22 entspricht annähernd dem Amplitudenspektrum 8 des Sendesignals 4, ist aber vorwiegend verrauscht und aufgrund des Doppler-Effekts relativ zum Sendesignal 4 frequenzverschoben.

Das Amplitudenspektrum 8 des Sendesignals 4 und das Amplitudenspektrum 22 des Empfangssignals 20 werden beide in einem weiteren Verarbeitungsschritt einem Qualitätsermittlungsmodul 24 übergeben. Hier werden eine Mehrzahl von relativen Frequenzverschiebungen zwischen dem Sendesignal und dem Empfangssignal 20 um jeweils einen theoretisch möglichen, reellen Frequenzverschiebungswert vorgenommen.

Mit der Absicht, den jeweiligen angewandten Frequenzverschiebungswert ein Qualitätsmaß zuzuordnen, wird mittels eines Mustervergleichs im Qualitätsermittlungsmodul 24 die Qualität einer Übereinstimmung zwischen den relativ zueinander verschobenen Sendesignal 4 und Empfangssignal 20 ermittelt und durch ein entsprechendes Qualitätsmaß angegeben, wobei das Qualitätsmaß den jeweiligen Frequenzverschiebungswert zugeordnet wird, um den das Sendesignal 4 und das Empfangssignal 20 zueinander verschoben sind.

Die im Qualitätsermittlungsmodul 24 ermittelten Qualitätsmaße werden zusammen mit den zugehörigen verwendeten reellen Frequenzverschiebungswerten einem Auswahlmodul 28 übergeben, welches daraus dasjenige Qualitätsmaß ermittelt, welches der höchsten Qualität der Übereinstimmung zwischen dem relativ verschobenen Sendesignal 4 und Empfangssignal 20 entspricht. Der zu diesem Qualitätsmaß zugehörige reelle Frequenzverschiebungswert wird der zu bestimmenden Doppler-Frequenzverschiebung 30 gleichgesetzt und ausgegeben.

Fig. 3 zeigt eine schematische Darstellung zur Erläuterung der Funktion des Qualitätsermittlungsmoduls 24 anhand eines Ausführungsbeispiels der Erfindung. Die vorliegenden Amplitudenspektren 8, 22 werden dem Qualitätsermittlungsmodul 24 übergeben. Dabei muss das Amplitudenspektrum 22 des Empfangssignals 20 für jeden Verfahrensdurchlauf erneut berechnet werden, während das Amplitudenspektrum 8 des Sendesignals 4 für mehrere Verfahrensdurchläufe in dem System gespeichert werden kann, solange das Sendesignal 4 sich nicht ändert.

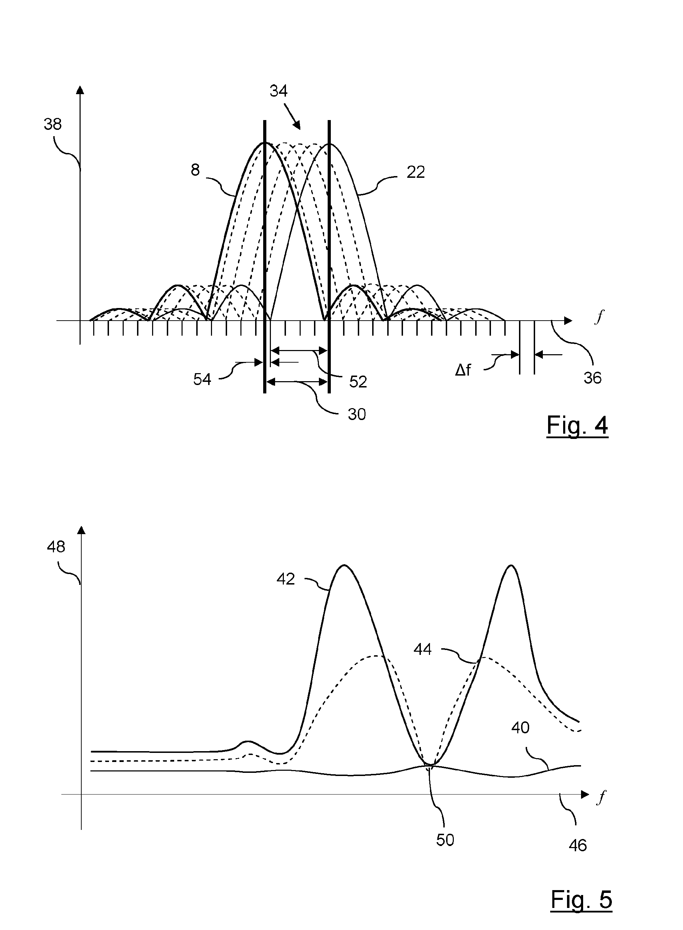

In einem Grob-Verschiebungs-Modul 32 wird das Amplitudenspektrum 22 des Empfangssignals 20, wie in Fig. 4 dargestellt, verschoben.

Fig. 4 zeigt eine vereinfachte Darstellung des Amplitudenspektrums 8 des Sendesignals 4 in einem gleichen Koordinatensystem wie das Amplitudenspektrum 22 des Empfangssignals 20 zusammen mit einer Mehrzahl verschobener Amplitudenspektren 34. In dem Koordinatensystem wird die Frequenz f auf einer horizontalen Achse 36 und die Amplitude der Amplitudenspektren auf einer vertikalen Achse 38 angegeben.

Das Verschieben des Amplitudenspektrums 22 des Empfangssignals 20 erfolgt solange um jeweils einen Frequenzschritt Δf, bis das Amplitudenspektrum 22 mit dem Amplitudenspektrum 8 des Sendesignals 4 bestmöglich übereinstimmt.

Der Frequenzschritt Δf ist dabei das Verhältnis aus Abtastfrequenz und FFT-Länge des Amplitudenspektrums 22, welche die Frequenzauflösung angibt und entspricht dem Frequenzverschiebungswert. Es ist jedoch ebenso denkbar, ein Vielfaches dieser Frequenzauflösung als Frequenzschritt Δf bzw. als Frequenzverschiebungswert festzulegen.

Zum Bestimmen einer bestmöglichen Übereinstimmung zwischen dem Amplitudenspektrum 8 und dem Amplitudenspektrum 22 wird zu jeder Verschiebung um einen möglichen Frequenzverschiebungswert ein Mustervergleich durchgeführt. Gemäß Fig. 3 erfolgt dieser Mustervergleich in dem Auswahlmodul 28. Es werden dafür das Amplitudenspektrum 8 des Sendesignals 4 sowie die Mehrzahl der verschobenen Amplitudenspektren 34 dem Auswahlmodul 28 übergeben. Erfolgt der Mustervergleich anhand einer linearen Regression, so wird zu jedem verschobenen Amplitudenspektrum 34 eine Standardabweichung berechnet. Die Standardabweichung entspricht dem zu ermittelnden Qualitätsmaß und wird dem auf die jeweilige Verschiebung angewandten Frequenzverschiebungswert zugeordnet.

Die Erfindung ist jedoch nicht auf die lineare Regression zur Durchführung des Mustervergleiches beschränkt. Bei alternativen Ausführungsformen kann als A-nalyseverfahren beispielsweise eine Korrelation durchgeführt werden.

Fig. 5 zeigt eine Darstellung der Ergebnisse einer möglichen linearen Regression. Aufgetragen sind sowohl die Steigung 40 der Regressionsgeraden, der Y-Offset 42 sowie die Standardabweichung 44 jeweils über eine horizontale Achse 46 für die Frequenz f und über eine vertikale Achse 48 zur Darstellung der Amplitude.

An der Stelle 50, an der die Standardabweichung 44 als Funktion ihr Minimum erreicht, befindet sich auf der horizontalen Achse 46 derjenige Frequenzverschiebungswert, der einer bestmöglichen Übereinstimmung zwischen den relativ zueinander verschobenen Sendesignal 4 und Empfangssignal 20 entspricht. Der zu dieser Stelle 50 gehörende Frequenzverschiebungswert wird als sog. Grobwert 52 dem Grob-Verschiebungs-Modul 32 übergeben.

Bei einer alternativen Verfahrensvariante der vorstehend beschriebenen Ermittlung des Grobwertes 52 ist die Ermittlung des Grobwertes 52 nicht auf die Verschiebung des Amplitudenspektrums 22 des Empfangssignals 20 beschränkt. Da das erfindungsgemäße Verfahren auf relative Frequenzverschiebungen zwischen dem Sendesignal 4 und dem Empfangssignal 20 beruht, ist alternativ ebenso die Verschiebung des Amplitudenspektrums 8 des Sendesignals 4 um entsprechende Frequenzschritte Δf bzw. Frequenzverschiebungswerte durchführbar.

Der Grobwert 52 ist gleich dem Einfachen oder einem ganzzahligen Mehrfachen der Frequenzauflösung. Die Genauigkeit der bestmöglichen Übereinstimmung zwischen den Amplitudenspektren 8 und 22 ist jedoch durch die Frequenzauflösung vorbestimmt. Die tatsächliche zu bestimmende Doppler-Frequenzverschiebung 30 zwischen dem Sendesignal 4 und dem Empfangssignal 20 kann jedoch einem Bruchteil der Frequenzauflösung oder ein Mehrfaches eines Bruchteils der Frequenzauflösung betragen. Für die Bestimmung der Doppler-Frequenzverschiebung 30 muss daher noch ein Feinwert 54 ermittelt werden, welcher gemäß Fig. 4 zusammen mit dem Grobwert 52 die Doppler-Frequenzverschiebung 30 liefert.

Zur Bestimmung des Feinwertes 54 wird zunächst der zuvor in dem Auswahlmodul 28 ermittelte Grobwert 52 gemäß Fig. 3 dem Grob-Verschiebungs-Modul 32 übergeben.

In dem Grob-Verschiebungs-Modul 32 wird zur Ermittlung eines verschobenen Amplitudenspektrums 55 das ermittelte Amplitudenspektrum 22 des Empfangssignals 20 um den zuvor ermittelten Grobwert 52 verschoben, so dass zwischen den Amplitudenspektren 8 und 55 nur noch eine Verschiebung vorliegt, die einem Bruchteil der Frequenzauflösung bzw. Frequenzschritt Δf beträgt. Das derart verschobene Amplitudenspektrum 55 wird anschließend einem Fein-Verschiebungs-Modul 56 übergeben.

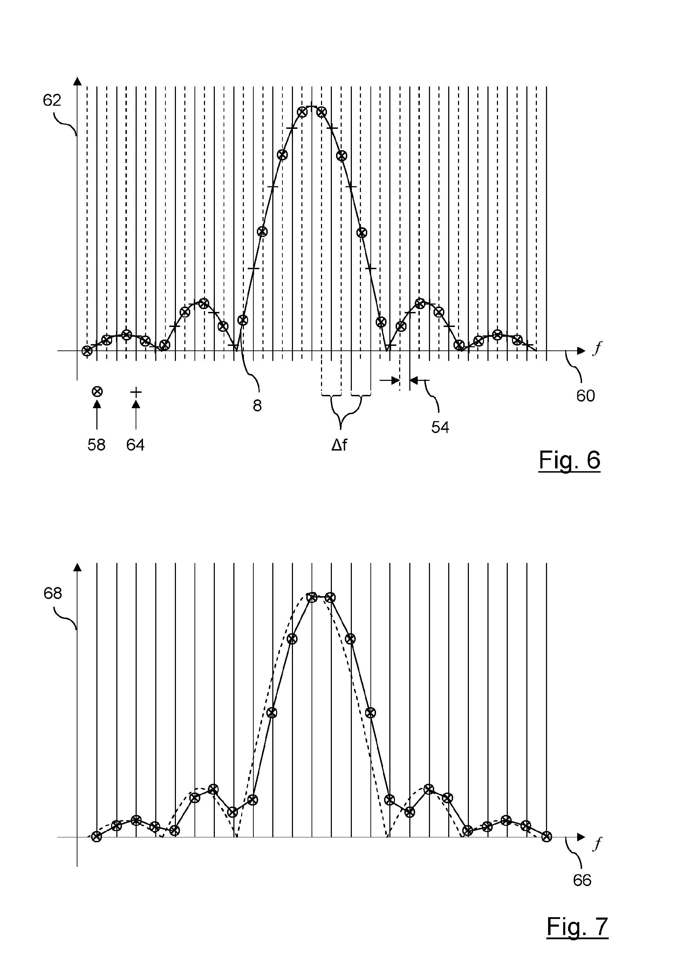

Um die Frequenzauflösung für eine Ermittlung einer genauen Doppler-Frequenzverschiebung zu erhöhen, werden in dem Fein-Verschiebungs-Modul 56 Zwischenwerte 58 für das bekannte Amplitudenspektrum 8 des Sendesignals 4 gemäß Fig. 6 berechnet.

Fig. 6 zeigt eine Darstellung der Zwischenwerte 58 des Amplitudenspektrums 8 des Sendesignals 4, wobei die Frequenz f auf einer horizontalen Achse 60 dargestellt ist und die Amplitude des Amplitudenspektrums 8 auf einer vertikalen Achse 62.

Dadurch dass das Sendesignal 4 bekannt ist, lassen sich zusätzlich zu den mittels der FFT ermittelten Werte 64 des Amplitudenspektrums 8 theoretisch beliebig viele weitere Zwischenwerte 58 berechnen. Auf diese Weise kann die Frequenzauflösung des Amplitudenspektrums 8 beliebig erhöht werden, was schließlich zur Erhöhung der Genauigkeit der Bestimmung der Doppler-Frequenzverschiebung 30 führt. Die Zwischenwerte 58 werden dabei mathematisch bestimmt mittels analytischen oder rechnerischen Verfahren und weisen untereinander wiederum den Abstand des Frequenzschrittes Δf bzw. der Frequenzauflösung auf. Dies ist notwendig, um den nachfolgenden Mustervergleich durchführen zu können. Der Abstand zwischen dem Zwischenwert 58 und einem beabstandeten FFT-Wert 64 entspricht dann dem Feinwert 54. Das Amplitudenspektrum 8 wird anschließend um den derart ermittelten Feinwert 54 verschoben. Fig. 7 zeigt eine Darstellung des um den Feinwert 54 verschobenen Amplitudenspektrums 8 des Sendesignals 4. Es ist mit einer gestrichelten Linie das ursprüngliche Amplitudenspektrum 8 und mit einer durchgezogenen Linie das verschobene bzw. neu berechnete Amplitudenspektrum dargestellt. Die horizontale Achse 66 enthält die Frequenzwerte f und die vertikale Achse 68 die Amplitudenwerte.

Die Erfindung ist jedoch nicht auf eine Ermittlung der Zwischenwerte 58 anhand des Amplitudenspektrums 8 des Sendesignals 4 beschränkt. Bei alternativen Ausführungsformen wird das Amplitudenspektrum 22 des Empfangssignals 20 für die Ermittlung der Zwischenwerte 58 herangezogen. Die Zwischenwerte 58 sind jedoch aufgrund des verrauschten Empfangssignals 20 fehlerbehaftet und können lediglich mittels Interpolation berechnet werden.

Auf derartige Weise werden eine Mehrzahl an Feinwerten 54 ermittelt, zu denen eine Mehrzahl verschobener Amplitudenspektren 70 berechnet werden, welche zusammen mit dem verschobenen Amplitudenspektrum 55 gemäß dem in Fig. 3 dargestellten Verfahren dem Auswahlmodul 28 übergeben werden.

In dem Auswahlmodul 28 wird erneut ein Mustervergleich durchgeführt. Es werden das um den Grobwert verschobene Amplitudenspektrum 55 des Empfangssignals 20 mit der Mehrzahl um Feinwerte 54 verschobene Amplitudenspektren 70 verglichen und mittels linearer Regression das Qualitätsmaß ermittelt, welches aus den verschobenen Amplitudenspektren 70 dasjenige mit der besten Übereinstimmung zum Amplitudenspektrum 55 angibt.

Der zu diesem Qualitätsmaß zugehörige Feinwert 54 ergibt zusammen mit dem zuvor ermittelten Grobwert 52 die gesuchte Doppler-Frequenzverschiebung 30, welche ausgegeben wird, um bspw. eine Geschwindigkeit des Wasserfahrzeugs zu ermitteln.

Aus dem zu dem Grobwert 52 zugehörigen Qualitätsmaß und dem zu dem Feinwert 54 zugehörigen Qualitätsmaß lässt sich ein Gesamtqualitätsmaß angeben, welches die nachfolgende Berechnung der Geschwindigkeit qualitativ bewertet.

In einer alternativen Ausgestaltung der Erfindung wird die Qualität der Übereinstimmung zwischen den relativ zueinander verschobenen Sendesignal 4 und Empfangssignal 20 mittels einer Faltung im Zeitbereich ermittelt. Dazu wird jeweils ein gefaltetes Signal aus dem jeweiligen, um den Frequenzverschiebungswert zueinander verschobenen Sendesignal 4 und Empfangssignal 20 erzeugt. Das derart erzeugte, gefaltete Signal wird anschließend in den Frequenzbereich transformiert und weist einen Betrag an seiner maximalen Amplitude auf, der dem Qualitätsmaß gleichgesetzt wird.

Das vorstehend beschriebene Verfahren kann dahingehend abgewandelt werden, dass keine Unterteilung des reellen Frequenzverschiebungswertes in einen Grobwert und einen Feinwert vorgenommen wird.

Das Verfahren gemäß Fig. 3 verfügt dann lediglich über ein Fein-Verschiebungs-Modul 56. Der in dem Fein-Verschiebungs-Modul 56 zu ermittelnde Feinwert 54 umfasst dann jedoch nicht nur einen Bruchteil der Frequenzauflösung, sondern auch ein Vielfaches des Bruchteils der Frequenzauflösung und nimmt somit einen beliebigen reellen Wert an.

**Zur Bestimmung der aus dem Doppler-Effekt** resultierenden Doppler-Frequenzverschiebung zwischen dem Sendesignal 4 und dem Empfangssignal 20 wird in dieser Verfahrensvariante wahlweise das Sendesignal oder das Empfangssignal um einen reellen Frequenzverschiebungswert verschoben.

Die Funktionsweise des Auswahlmoduls 28 entspricht hier analog dem vorstehend beschriebenen Ausführungsbeispiel.

Alle in der vorgenannten Figurenbeschreibung, in den Ansprüchen und in der Beschreibungseinleitung genannten Merkmale sind sowohl einzeln als auch in beliebiger Kombination miteinander einsetzbar. Die Offenbarung der Erfindung ist somit nicht auf die beschriebenen bzw. beanspruchten Merkmalskombinationen beschränkt. Vielmehr sind alle Merkmalskombinationen als offenbart zu betrachten.

## Patentansprüche

1. Verfahren zum Bestimmen einer aus dem Doppler-Effekt resultierenden Doppler-Frequenzverschiebung (30) zwischen einem Sendesignal (4) und einem aus diesem Sendesignal (4) resultierenden Empfangssignal (20),
**gekennzeichnet durch** folgende Schritte:
a) Durchführen einer Mehrzahl von relativen Frequenzverschiebungen um jeweils einen reellen Frequenzverschiebungswert zwischen dem Sendesignal (4) und dem Empfangssignal (20) , indem
i) wenigstens ein verschobenes diskretes Amplitudenspektrum (8) des Sendesignals (4) und wenigstens ein verschobenes diskretes Amplitudenspektrum (22) des Empfangssignals (20) erzeugt wird oder
ii) eine Mehrzahl von verschobenen diskreten Amplitudenspektren des Sendesignals (4) erzeugt werden oder
iii) eine Mehrzahl von verschobenen diskreten Amplitudenspektren des Empfangssignals (20) erzeugt werden,
und wobei der reelle Frequenzverschiebungswert einem Bruchteil oder einem reellen Mehrfachen der Frequenzauflösung des diskreten Amplitudenspektrums des Sendesignals oder des Empfangssignals entspricht,
b) Ermitteln jeweils einer Qualität einer Übereinstimmung zwischen dem Sendesignal (4) und dem Empfangssignal (20), die relativ um den jeweiligen reellen Frequenzverschiebungswert zueinander verschobenen sind, wobei die Qualität dieser Übereinstimmung als Qualitätsmaß dem jeweiligen reellen Frequenzverschiebungswert zugeordnet wird, und
c) Ermitteln desjenigen Qualitätsmaßes aus der Mehrzahl von Qualitätsmaßen, welches der höchsten Qualität der Übereinstimmung entspricht, wobei der diesem ermittelte Qualitätsmaß zugeordnete reelle Frequenzverschiebungswert der zu bestimmenden aus dem Doppler-Effekt resultierenden Doppler-Frequenzverschiebung (30) gleichgesetzt wird.

2. Verfahren nach Anspruch 1,
**dadurch gekennzeichnet, dass**
das diskrete Amplitudenspektrum (8) des Sendesignals (4) und/oder das diskrete Amplitudenspektrum (22) des Empfangssignals (20) mittels einer Frequenztransformation, insbesondere mittels einer diskreten Fourier-Transformation (DFT) oder mittels einer schnellen Fourier-Transformation (FFT), aus seinem Signal im Zeitbereich, insbesondere aufgrund des Leck-Effekts fehlerhaft, erzeugt wird, wobei die Frequenztransformation jeweils zu einer gleichen Frequenzauflösung führt.

3. Verfahren einem der Ansprüche 1 oder 2,
**dadurch gekennzeichnet, dass**
die Qualität der Übereinstimmung zwischen dem Sendesignal (4) und dem Empfangssignal (20), die relativ um den jeweiligen Frequenzverschiebungswert zueinander verschobenen sind, nachfolgend als verschobenes Signalpaar bezeichnet, mittels eines Mustervergleichs ihrer Amplitudenspektren im Frequenzbereich ermittelt wird.

4. Verfahren nach Anspruch 3,
**dadurch gekennzeichnet, dass**
der Mustervergleich zwischen den Amplitudenspektren des jeweiligen verschobenen Signalpaares im Frequenzbereich mittels einer linearen Regression durchgeführt wird, wobei eine Standardabweichung des Mustervergleichs gleich dem Qualitätsmaß ist.

5. Verfahren einem der Ansprüche 1 oder 2,
**dadurch gekennzeichnet, dass**
die Qualität der Übereinstimmung zwischen dem Sendesignal (4) und dem Empfangssignal (20), die relativ um den jeweiligen möglichen Frequenzverschiebungswert zueinander verschobenen sind, mittels einer Faltung im Zeitbereich ermittelt wird, indem jeweils ein gefaltetes Signal aus dem jeweiligen, um den jeweiligen Frequenzverschiebungswertes zueinander verschobenen Sendesignal (4) und Empfangssignal (20) erzeugt wird, wobei das erzeugte gefaltete Signal in den Frequenzbereich transformiert einen Betrag an seiner maximalen Amplitude aufweist, der dem Qualitätsmaß gleichgesetzt wird.

6. Verfahren nach einem der vorherigen Ansprüche,
**dadurch gekennzeichnet, dass**
der reelle Frequenzverschiebungswert in zwei nacheinander zu bestimmende Frequenzverschiebungswerte aufgeteilt wird, wobei ein erster Frequenzverschiebungswert, nachfolgend als Grobwert (52) bezeichnet, gleich dem Einfachen oder einem ganzzahligen Mehrfachen der Frequenzauflösung ist, und ein zweiter Frequenzverschiebungswert, nachfolgend als Feinwert (54) bezeichnet, gleich einem Bruchteil des Grobwertes (52) ist.

7. Verfahren nach Anspruch 6,
**dadurch gekennzeichnet, dass**
ein dem Grobwert (52) oder dem Feinwert (54) zuordbares Qualitätsmaß mittels der Qualität der Übereinstimmung zwischen dem verschobenen Signalpaar durch eine Faltung des verschobenen Signalpaares oder durch den Mustervergleich zwischen dem verschobenen Signalpaar ermittelt wird.

8. Verfahren nach einem der Ansprüche 6 oder 7,
**dadurch gekennzeichnet, dass**
ein dem Feinwert (54) zugeordnetes Qualitätsmaß mittels der Qualität der Übereinstimmung zwischen einem um den Grobwert (52) verschobenen Amplitudenspektrum (55) des Empfangssignals (20) und einem um diesen Feinwert (54) verschobenen Amplitudenspektrum des Sendesignals (4) im Frequenzbereich ermittelt wird.

9. Verfahren nach einem der vorherigen Ansprüche,
**dadurch gekennzeichnet, dass**
das um einen Frequenzverschiebungswert verschobene diskrete Amplitudenspektrum des Sendesignals (4) oder Empfangssignals (20) auf Grundlage seines diskreten Amplitudenspektrums erzeugt wird, indem mehrere jeweils um die Frequenzauflösung zueinander beabstandete Interpolanten (58) erzeugt werden, insbesondere mittels linearer, polynomialer oder trigonometrischer Interpolation, wobei die Interpolanten (58) als (neue) Amplitudenwerte im Amplitudenspektrum an bisher diskret undefinierten (neuen) Frequenzwerten ausgebildet sind und diese (neuen) Amplitudenwerte aus zwei oder mehreren den bisher diskret undefinierten (neuen) Frequenzwert benachbarten Frequenzwerten zugeordneten Amplituden ermittelt werden.

10. Verfahren nach einem der Ansprüche 1 bis 8,
**dadurch gekennzeichnet, dass**
das um einen Frequenzverschiebungswert verschobene diskrete Amplitudenspektrum des Sendesignals (4) auf Grundlage seines Amplitudenfrequenzgangs erzeugt wird, indem aus diesem Amplitudenfrequenzgang des Sendesignals (4) das diskrete um den Frequenzverschiebungswert verschobene Amplitudenspektrum des Sendesignals (4) numerisch, analytisch und/oder graphisch ermittelt wird, und dessen Amplituden dieses ermittelten Amplitudenspektrums jeweils um die Frequenzauflösung beabstandet sind.

11. Verfahren nach einem der vorherigen Ansprüche,
**dadurch gekennzeichnet, dass**
eine Geschwindigkeit in Abhängigkeit von Wellenübertragungseigenschaften in einem Medium, insbesondere im Wasser, aus der Doppler-Frequenzverschiebung (30) ermittelt wird, wobei diese ermittelte Geschwindigkeit mittels des Qualitätsmaßes, das dieser Doppler-Frequenzverschiebung (30) zugeordnet ist, qualitativ bewertet wird.

12. Vorrichtung zur Bestimmung einer aus dem Doppler-Effekt resultierenden Doppler-Frequenzverschiebung (30) zwischen einem Sendesignal (4) einer Sendeanordnung (2) und einem aus diesem Sendesignal (4) resultierenden Empfangssignal (20) einer Empfangsanordnung (18), insbesondere zur Durchführung des Verfahrens nach einem der Ansprüche 1 bis 11,
**gekennzeichnet durch**,
a) ein Spektrumgeneratormodul (6), das derart ausgebildet ist, um eine Mehrzahl von relativen Frequenzverschiebungen um jeweils einen möglichen Frequenzverschiebungswert zwischen dem Sendesignal (4) und dem Empfangssignal (20) durchzuführen, indem
i) wenigstens ein verschobenes diskretes Amplitudenspektrum (8) des Sendesignals (4) und wenigstens ein verschobenes diskretes Amplitudenspektrum (22) des Empfangssignals (20) erzeugt wird oder
ii) eine Mehrzahl von verschobenen diskreten Amplitudenspektren des Sendesignals (4) erzeugt werden oder
iii) eine Mehrzahl von verschobenen diskreten Amplitudenspektren des Empfangssignals (20) erzeugt werden,
und wobei der reelle Frequenzverschiebungswert einem Bruchteil oder einem reellen Mehrfachen der Frequenzauflösung des diskreten Amplitudenspektrums des Sendesignals oder des Empfangssignals entspricht,
b) ein Qualitätsermittlungsmodul (24), das derart ausgebildet ist, um jeweils eine Qualität einer Übereinstimmung zwischen dem Sendesignal (4) und dem Empfangssignal (20), die relativ um den jeweiligen möglichen Frequenzverschiebungswert zueinander verschobenen sind, zu ermitteln, wobei die Qualität dieser Übereinstimmung als Qualitätsmaß dem jeweiligen möglichen Frequenzverschiebungswert zugeordnet wird, und
c) ein Auswahlmodul (28), das derart ausgebildet ist, um dasjenige Qualitätsmaß aus der Mehrzahl von Qualitätsmaßen zu ermitteln, welches der höchsten Qualität der Übereinstimmung entspricht, wobei der diesem ermittelte Qualitätsmaß zugeordnete mögliche Frequenzverschiebungswert der zu bestimmenden aus dem Doppler-Effekt resultierenden Doppler-Frequenzverschiebung (30) gleichgesetzt wird.

13. Vorrichtung nach Anspruch 12,
**dadurch gekennzeichnet, dass**
die Vorrichtung die Sendeanordnung (2) und die Empfangsanordnung (18) umfasst und diese Sendeanordnung (2) und diese Empfangsanordnung (18) an einem Wasserfahrzeug unter Wasser angeordnet und derart ausgebildet sind, um hydroakustische Wellen zu senden bzw. zu empfangen.

14. Vorrichtung nach Anspruch 12,
**dadurch gekennzeichnet, dass**
die Vorrichtung die Sendeanordnung (2) und die Empfangsanordnung (18) umfasst und diese Sendeanordnung (2) und diese Empfangsanordnung (18) derart ausgebildet sind, um elektromagnetische Wellen zu senden bzw. zu empfangen.

15. Computerprogramm, welches Computerprogrammcodemittel aufweist, die für die Ausführung des Verfahrens nach einem der Ansprüche 1 bis 11 geeignet sind, wenn das Programm auf einem Computer ausgeführt wird.
